# NEUE EUROPÄISCHE PATENTSCHRIFT

(11) **EP 2 393 680 B2**
(45) Veröffentlichungstag und Bekanntmachung des Hinweises auf die Entscheidung über den Einspruch: **06.04.2016**
(45) Hinweis auf die Patenterteilung: 21.11.2012
(21) Anmeldenummer: 10702623.9
(22) Anmeldetag: 03.02.2010
(51) Int. Cl.: B60G 17/052, F16K 3/10, F16K 11/074

(54) **NIVEAUREGELVENTIL MIT DRUCKBELASTETER VENTILSCHEIBE**
LEVELLING VALVE WITH PRESSURE LOADED VALVE DISC
VALVE DE NIVELLEMENT AVEC PLAQUETTE DE VALVE SOUS PRESSION

(30) Priorität: 05.02.2009 DE 102009007691
(43) Veröffentlichungstag der Anmeldung: 14.12.2011
(73) Patentinhaber: KNORR-BREMSE Systeme für Nutzfahrzeuge GmbH, 80809 München (DE)
(72) Erfinder: VOITH, András, H-1183 Budapest (HU); TÓTH, Janos, H-6000 Kecskemét (HU); KÁNTOR, Kornél, H-6000 Kecskemét (HU); MUSER, Michael, 85276 Pfaffenhofen (DE); FAZEKAS, Csaba, H-1213 Budapest (HU)
(74) Vertreter: Wiedemann, Markus
(86) Internationale Anmeldenummer: PCT/EP2010/000642
(87) Internationale Veröffentlichungsnummer: WO 2010/089089

(56) Entgegenhaltungen:
- EP-A1- 0 556 086
- DE-A1- 1 939 111
- DE-A1-102006 006 439
- DE-A1-102006 032 348
- DE-B- 1 144 125
- DE-B3-102005 017 590
- DE-B4-102005 032 219
- DE-C1- 10 154 778
- DE-C2- 3 008 239
- DE-C2- 4 134 102
- FR-A1- 2 576 555
- US-A- 1 519 670
- US-A- 2 998 243
- US-A- 4 497 505
- US-A1- 4 773 672
- US-B1- 6 202 992
- US-B2- 7 028 996

## Beschreibung

Die Erfindung geht aus von einem Niveauregelventil für eine Luftfederungseinrichtung zur Niveauregelung des Fahrzeugaufbaus von luftgefederten Fahrzeugen, gemäß dem Oberbegriff von Anspruch 1.

Ein Niveauregelventil als Bestandteil einer Luftfederungseinrichtung ist aus der DE 693 03 635 T2 bekannt. Solche werden meist für schwere Nutzfahrzeuge verwendet, da diese bereits über eine Druckluftquelle für die Versorgung pneumatischer Bremsen verfügen. Bei der bekannten Luftfederungseinrichtung wird das Niveauregelventil durch den Fahrzeugaufbau dadurch gesteuert, dass der Fahrzeugaufbau mit einem der Ventilkörper verbunden ist, wobei bei Beladung des Fahrzeugaufbaus ein weiterer, mit einem Achskörper in Wirkverbindung stehender Ventilkörper gegenüber dem einen Ventilkörper verdreht wird, wodurch ein mit einer Druckluftquelle in Verbindung stehender Strömungskanal in dem einen Ventilkörper in Überdeckung mit einem mit den Luftfederbälgen in Verbindung stehenden Strömungskanal in dem anderen Ventilkörper gerät und so die Luftfederbälge belüftet werden, bis der Hebel den einen Ventilkörper derart verstellt, dass die Strömungsverbindung unterbrochen und das vor der Beladung vorhandene Niveau des Fahrzeugaufbaus wieder hergestellt wird. Analog wird bei einer Entlastung des Fahrzeugaufbaus der Hebel zusammen mit dem einen Ventilkörper in eine Richtung verstellt, in welcher ein mit einer Drucksenke in Verbindung stehender Strömungskanal in dem einen Ventilkörper in Überdeckung mit einem mit den Luftfederbälgen in Verbindung stehenden Strömungskanal in dem anderen Ventilkörper gerät und so die Luftfederbälge entlüftet werden bis die vor der Entlastung vorhandene Niveaulage des Fahrzeugaufbaus wieder erreicht ist. Mit Hilfe des Niveauregelventils wird daher die Niveaulage des Aufbaus unabhängig von der Beladung konstant gehalten.

Bei dem aus der DE 693 03 635 T2 bekannten Niveauregelventil ist der drehbar im Ventilgehäuse gelagerte Ventilkörper einerseits durch eine Druckfeder und andererseits mittels des in einer Kammer herrschenden Drucks gegen den drehfest im Ventilgehäuse gelagerten Ventilkörper gespannt, um eine Abdichtung der in die Kontaktflächen mündenden Strömungswege zu gewährleisten, wobei der Druck in der Kammer von einem Druckreservoir abgeleitet ist. Dabei wird der Druck aus dem Druckreservoir durch den einen Strömungskanal im drehfesten Ventilkörper sowie einen weiteren Strömungskanal in dem drehbaren Ventilkörper hindurch in die Kammer geleitet. Zur Abdichtung dieser Kammer gegenüber der Umgebung ist eine Dichtung zwischen einem oberen Rand der Kammer und dem drehbar gelagerten Ventilkörper vorhanden. Weiterhin vorgesehen werden, welche die Kammer Zusätzlich ist zwischen dem drehfest im Ventilgehäuse gelagerten Ventilkörper und dem Ventilgehäuse eine weitere Dichtung vorhanden, weil die Strömungswege dieses Ventilkörpers über das Ventilgehäuse mit Druckluft versorgt werden. Bedingt durch die beiden Dichtungen besteht ein gewisser Herstell- bzw. Montageaufwand.

Da weiterhin der im Ventilgehäuse drehbar gelagerte Ventilkörper durch den Druck des Druckreservoirs gegen den drehfest gelagerten Ventilkörper belastet ist, bedingt eine Verminderung des Drucks im Druckreservoir, wie es beispielsweise bei einem über längere Zeit abgestellten Anhänger einer Zugfahrzeug-Anhänger-Kombination der Fall ist, gleichzeitig eine Verminderung des Anpressdrucks der beiden Ventilkörper, wodurch es zu unerwünschten bzw. unkontrollierten Strömungen zwischen den Strömungswegen kommen kann. Nicht zuletzt kann die Kammer auch mit einem Entlüftungsströmungskanal in Verbindung kommen, so dass der Druck in der Kammer ausfällt, wodurch ebenfalls die Abdichtung der in die Kontaktflächen mündenden Strömungswege nicht mehr gewährleistet ist.

Ein weiteres Niveauregelventil ist in DE-B-1144125 offenbart. Diese Schrift offenbart ein Niveauregelventil für eine Luftfederungseinrichtung zur Niveauregelung des Fahrzeugaufbaus von luftgefederten Fahrzeugen durch Luftversorgung wenigstens eines Luftfederbalgs abhängig von der Niveaulage des Fahrzeugsaufbaus, welches wenigstens zwei sich entlang von Kontaktflächen kontaktierende, in einem Ventilgehäuse gelagerte und entlang der Kontaktflächen relativ zueinander bewegliche Ventilkörper aufweist, in welchen jeweils in die Kontaktflächen mündende Strömungswege ausgebildet sind, wobei ein Ventilkörper in dem Ventilgehäuse drehfest gelagert und, abhängig von der Niveaulage des Fahrzeugaufbaus, der andere Ventilkörper relativ zu dem einen Ventilkörper um eine Achse drehbar ist, wobei sich ein bestimmter Überdeckungsgrad der Mündungen der Strömungswege der Ventilkörper einstellt, wobei der eine drehfest gelagerte Ventilkörper im Ventilgehäuse in Bezug zur Achse axial beweglich gelagert ist und mit seiner von der Kontaktfläche weg weisenden Seitenfläche mehrere Kammern begrenzt, von weichen eine Kammer mit dem wenigstens einen Luftfederbalg in Strömungsverbindung steht, und wobei der eine Ventilkörper durch den in den Kammern herrschenden Druck gegen den anderen Ventilkörper gedrängt ist.

Ein gattungsgemäßes Niveauregelventil wird in DE 101 54 778 C1 beschrieben.

Der vorliegenden Erfindung liegt die Aufgabe zugrunde, ein Niveauregelventil der eingangs erwähnten Art derart weiter zu entwickeln, dass es einfacher zu fertigen ist und eine höhere Betriebssicherheit aufweist.

Diese Aufgabe wird erfindungsgemäß durch die Merkmale von Anspruch 1 gelöst.

### Offenbarung der Erfindung

Die Erfindung geht davon aus, dass der eine, drehfest gelagerte Ventilkörper im Ventilgehäuse in Bezug zur Achse axial beweglich gelagert ist und mit seiner von der Kontaktfläche weg weisenden Seitenfläche mehrere im Ventilgehäuse ausgebildete Kammern begrenzt, von welchen eine Kammer mit einem Druckluftreservoir und wenigstens eine weitere Kammer mit dem wenigstens einen Luftfederbalg in Strömungsverbindung steht, wobei der eine Ventilkörper durch den in den Kammern herrschenden Druck gegen den anderen Ventilkörper gedrängt ist.

Indem nicht der drehbare Ventilkörper, sondern der drehfest gelagerte Ventilkörper durch den Druck in den Kammern belastet ist, kann eine Dichtung entfallen, da es dann nur noch notwendig ist, die mit dem drehfest gelagerten Ventilkörper zusammen wirkenden Kammern abzudichten. Demgegenüber kann die dem Strömungen entlang seiner Kontaktfläche leitenden und drehbar gelagerten Ventilkörper zugeordnete Dichtung entfallen.

Weiterhin ist der drehfeste Ventilkörper außer durch den Reservoirdruck auch durch den Luftfederbalgdruck belastet. Daher steht bei einer Minderung des Reservoirdrucks aufgrund einer langen Standzeit des Fahrzeugs noch ein ausreichender Luftfederbalgdruck aufgrund des Eigengewichts des Fahrzeugs zur Verfügung, um die beiden Ventilkörper gegeneinander zu pressen und um so die gewünschte Dichtigkeit der Strömungswege aufrecht zu erhalten. Der eine Ventilkörper ist dann zwischen dem anderen Ventilkörper und den Kammern eingespannt.

Nicht zuletzt ist die Verteilung des die Anpresskraft erzeugenden Drucks auf mehrere Kammern von Vorteil, da dann weniger Gefahr einer Verkippung bzw. ungleichmäßigen Axialbelastung des einen Ventilkörpers besteht.

Erfindungsgemäß weist der eine Ventilkörper als Strömungswege wenigstens einen Belüftungskanal, einen Entlüftungskanal sowie einen Strömungskanal für den wenigstens einen Luftfederbalg der rechten Seite und einen Strömungskanal für den Luftfederbalg der linken Seite auf, wobei der Belüftungskanal, der Entlüftungskanal sowie die Strömungskanäle für den wenigstens einen Luftfederbalg der rechten Seite und für den Luftfederbalg der linken Seite einerseits in die Kontaktfläche des einen Ventilkörpers mit dem anderen Ventilkörper münden und andererseits der Belüftungskanal mit einem Druckluftreservoir-Anschluss des Ventilgehäuses, der Entlüftungskanal mit einer Drucksenke des Ventilgehäuses und der Strömungskanal für den wenigstens einen Luftfederbalg der rechten Seite mit einem Luftfederbalg-Anschluss des Ventilgehäuses und der Strömungskanal für den wenigstens einen Luftfederbalg der linken Seite mit einem weiteren Luftfederbalg-Anschluss des Ventilgehäuses in Strömungsverbindung steht.

Dann steht von den mehreren Kammern bevorzugt wenigstens eine Kammer mit dem Druckluftreservoir-Anschluss, wenigstens eine Kammer mit dem einen Luftfederbalg-Anschluss und wenigstens eine weitere Kammer mit dem weiteren Luftfederbalg-Anschluss des Ventilgehäuses in Strömungsverbindung, so dass aufgrund der dann drei unterschiedlichen Druckquellen eine hohe Sicherheit gegen Druckausfall und damit gegen Leckage gegeben ist.

Weiterhin weist der andere Ventilkörper an seiner zu dem einen Ventilkörper weisenden Kontaktfläche wenigstens eine mit der Mündung des Strömungskanals für den wenigstens einen Luftfederbalg der rechten Seite in Strömungsverbindung stehende Ausnehmung sowie wenigstens eine mit der Mündung des Strömungskanals für den wenigstens einen Luftfederbalg der linken Seite in Strömungsverbindung stehende Ausnehmung auf, wobei der Überdeckungsgrad dieser Ausnehmungen mit der Mündung des Belüftungskanal oder mit der Mündung des Entlüftungskanals des einen Ventilkörpers von der Niveaulage des Fahrzeugaufbaus abhängt. Die Ausnehmungen des anderen Ventilkörpers sind dabei als parallel zur Kontaktfläche verlaufende Nuten ausgebildet, wobei der Begriff "Nut" beinhaltet, dass ein Nutgrund vorhanden ist, es sich bei diesen Nuten also nicht um Durchgangslöcher handelt.

Die Ventilkörper sind als einander kontaktierende Ventilscheiben kreisförmigen Querschnitts mit im Wesentlichem identischen Durchmesser in Bezug zu einer zentralen Achse ausgebildet. In diesem Fall sind die Nuten des anderen Ventilkörpers zweckmäßig als radial voneinander beabstandete, in Bezug zur zentralen Achse konzentrische Kreisbögen ausgebildet.

Das aus DE 693 03 635 T2 bekannte Niveauregelventil verfügt über einen einzigen Anschluss für die Luftfederbälge der rechten Fahrzeugseite und für die Luftfederbälge der linken Fahrzeugseite. Damit kann aber nur ein einkreisiges System verwirklicht werden, bei welchem die Luftfederbälge der rechten Seite und der linken Seite gleichzeitig be- bzw. entlüftet werden. Bei sog. zweikreisigen Systemen sind die Luftfederbälge der rechten Fahrzeugseite und der linken Fahrzeugseite quasi unabhängig voneinander be- bzw. entlüftbar. Dies hat den Vorteil, dass große Wankbewegungen des Fahrzeugaufbaus beispielsweise bei Kurvenfahrt durch eine entsprechende Be- bzw. Entlüftung der kurvenäußeren Luftfederbälge bzw. der kurveninneren Luftfederbälge ausgeglichen werden können.

Das Ventilgehäuse des Niveauregelventils weist wenigstens einen Luftfederbalg-Anschluss für wenigstens einen Luftfederbalg der rechten Seite und wenigstens einen weiteren Luftfederbalg-Anschluss für wenigstens einen Luftfederbalg der linken Seite des Fahrzeugs sowie einen Verbindungskanal zwischen den beiden Luftfederbalg-Anschlüssen aufweist, in welchem wahlweise wenigstens ein Einsatzkörper in Form einer den Strömungsquerschnitt zwischen dem einen Luftfederbalg-Anschluss und dem weiteren Luftfederbalg-Anschluss verengenden Drossel oder in Form eines Sperrelements zum Sperren des Strömungsquerschnitts lösbar befestigt ist.

Falls eine Drossel in dem Verbindungskanal angeordnet wird, können Wankbewegungen des Fahrzeugaufbaus ausgeglichen werden, indem die Drossel eine Druckluftströmung von den Luftfederbälgen der höher belasteten Kurvenaußenseite zu den Luftfederbälgen der niedriger belasteten Kurveninnenseite nur eingeschränkt, genauer erst nach einer gewissen Zeit zulässt. Dadurch bleibt der Druck und damit die Federrate in den Luftfederbälgen der Kurvenaußenseite wenigstens für eine gewisse Zeitdauer hoch, was zu einer niedrigeren Einfederung an der Kurvenaußenseite und letztlich zu einer geringeren Wankbewegung führt. Auf diese Weise wird ein quasi-zweikreisiges System verwirklicht, bei welchem der Kreis der Luftfederbälge der rechten Fahrzeugseite und der Kreis der Luftfederbälge der linken Fahrzeugseite voneinander quasi entkoppelt sind.

Falls in dem Verbindungskanal ein Sperrelement zum Sperren einer Strömung zwischen dem einen Luftfederbalg-Anschluss und dem weiteren Luftfederbalg-Anschluss lösbar montiert wird, können die Luftfederbälge der rechten Fahrzeugseite und der linken Fahrzeugseite über die beiden nun strömungstechnisch völlig getrennten Luftfederbalg-Anschlüsse unabhängig voneinander be- bzw. entlüftet werden.

Nicht zuletzt kann auch auf den Einsatzkörper im Verbindungskanal völlig verzichtet werden, d.h. es wird kein Einsatzkörper in den Verbindungskanal eingesetzt, so dass eine ungehinderte Strömung zwischen den Luftfederbälgen der rechten Fahrzeugseite und der linken Fahrzeugseite möglich ist.

Damit ist das erfindungsgemäße Niveauregelventil universell für einkreisige und quasi-zweikreisige Luftfederungseinrichtungen einsetzbar, wobei sich die Umrüstung auf das jeweilige System auf das Auswechseln des Einsatzkörpers bzw. dessen Weglassen beschränkt, weshalb das Niveauregelventil sehr günstig herstellbar ist.

Zudem sind in dem einen Ventilkörper jeweils achsensymmetrisch oder spiegelsymmetrisch ein weiterer Belüftungskanal, ein weiterer Entlüftungskanal sowie ein weiterer Strömungskanal für den wenigstens einen Luftfederbalg der rechten Seite und ein weiterer Strömungskanal für den Luftfederbalg der linken Seite derart ausgebildet, dass in einer um 180 Grad um die zentrale Achse verschwenkten Lage des anderen Ventilkörpers in Bezug zu dem einen Ventilkörper die Ausnehmung des anderen Ventilkörpers mit der Mündung des Strömungskanals für den wenigstens einen Luftfederbalg der rechten Seite sowie die weitere Ausnehmung mit der Mündung des Strömungskanals für den wenigstens einen Luftfederbalg der linken Seite in Strömungsverbindung steht und der Überdeckungsgrad dieser Ausnehmungen mit der Mündung des Belüftüngskanals oder mit der Mündung des Entlüftungskanals des einen Ventilkörpers von der Niveaulage des Fahrzeugaufbaus abhängt.

Damit kann der andere Ventilkörper in Bezug zu dem einen Ventilkörper auch in einer um 180 Grad verdrehten Lage in das Ventilgehäuse eingebaut werden. Wenn beispielsweise der andere Ventilkörper mittels einer Hebelkinematik mit dem Fahrzeugaufbau in Wirkverbindung steht und abhängig von der Niveaulage oder der Last des Fahrzeugsaufbaus gegenüber dem einen Ventilkörper verdreht wird, ergibt sich dann eine höhere Flexibilität bezüglich der Einbaulage des Niveauregelventils.

Durch die in den Unteransprüchen aufgeführten Maßnahmen sind vorteilhafte Weiterbildungen und Verbesserungen der in den unabhängigen Ansprüchen angegebenen Erfindung möglich.

Wenn die im Ventilgehäuse ausgebildeten Kammern in Bezug auf die Seitenfläche des einen Ventilkörpers derart verteilt angeordnet sind, dass die aus den in den Kammern herrschenden Drücken resultierenden Druckkräfte entlang der Seitenfläche im wesentlichen gleich verteilt sind, wirkt eine gleichmäßige Flächenpressung auf den einen Ventilkörper, welcher dann auch gleichmäßig gegen den anderen Ventilkörper gespannt wird. Dadurch wird ein Verkippen des einen Ventilkörpers vermieden, wie auch das Auftreten von Leckagen zwischen den beiden Ventilkörpern.

Besonders bevorzugt ist weiterhin der andere Ventilkörper an einem um die Achse im Ventilgehäuse abhängig von der Niveaulage des Fahrzeugaufbaus drehbar gelagerten Mitnehmer axial verschieblich gelagert und durch den Druck in den Kammern gegen einen axialen Anschlag des Mitnehmers gedrängt. Dieser Mitnehmer nimmt daher den anderen Ventilkörper mit, wenn der Mitnehmer abhängig von der Niveaulage des Fahrzeugaufbaus gegenüber dem Gehäuse bzw. dem einen Ventilkörper verdreht wird. Der axiale Anschlag des Mitnehmers bildet dann ein Widerlager für den anderen Ventilkörper, wenn dieser indirekt über den einen Ventilkörper durch den in den Kammern anstehenden Druck belastet ist.

Gemäß einer Weiterbildung sind die Kammern mittels axial elastischer, sich einerseits an dem einen Ventilkörper und andererseits am Ventilgehäuse abstützenden Dichtungen gegeneinander abgedichtet, wobei die Dichtungen bevorzugt in Nuten des Ventilgehäuses gehalten sind.

Besonders bevorzugt sind die sich am Ventilgehäuse abstützenden Dichtungen ausgeführt, um eine derart große Vorspannung auf den einen Ventilkörper auszuüben, dass er auch bei drucklosen Kammern gegen den anderen, sich an dem axialen Anschlag des Mitnehmers abstützenden Ventilkörper dichtend gepresst oder gedrängt wird. In diesem Fall ist bedingt durch die von den elastischen Dichtungen auf den einen Ventilkörper ausgeübten Druckkräfte bereits eine ausreichende Flächenpressung zwischen den Kontaktflächen der beiden Ventilkörper vorhanden, um die gewünschte Dichtigkeit der Strömungswege aufrecht zu erhalten.

Alternativ kann der andere Ventilkörper durch in Bezug zu den vom Druck in den Kammern ausgeübten Kräften gegensinnig wirkende Druckfedermittel derart axial belastet sein, dass er auch bei drucklosen Kammern gegen den einen Ventilkörper dichtend gedrängt wird. Die Druckfedermittel sorgen dann bei einem Ausfall des Drucks in den Kammern für die die Dichtigkeit erzeugende axiale Vorspannung zwischen den beiden Ventilkörpern.

Gemäß einer weiteren Ausführungsform können auch beide Alternativen parallel verwirklicht sein.

Die Erfindung betrifft auch eine Luftfederungseinrichtung eines luftgefederten Fahrzeugs mit Niveauregelung des Fahrzeugaufbaus beinhaltend wenigstens ein oben beschriebenes Niveauregelventil.

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Schnittdarstellung eines Niveauregelventils einer Luftfederungseinrichtung eines Nutzfahrzeugs gemäß einer bevorzugten Ausführungsform der Erfindung;
- Fig.2: eine schematische Draufsicht auf das Niveauregelventil von Fig.1;
- Fig.2A: eine schematische Draufsicht auf das Niveauregelventil von Fig.1 in einer veränderten Einbaulage;
- Fig.3: eine schematisches Schnittbild des Niveauregelventils von Fig.1 mit einer Drossel als Einsatzkörper;
- Fig.4: eine schematisches Schnittbild des Niveauregelventils von Fig.1 ohne Einsatzkörper;
- Fig.5: ein schematisches Schaltbild einer Luftfederungseinrichtung eines Nutzfahrzeugs mit dem Niveauregelventil von Fig.3;
- Fig.6: ein schematisches Schaltbild einer Luftfederungseinrichtung eines Nutzfahrzeugs mit dem Niveauregelventil von Fig.4;
- Fig.7: eine schematische Ansicht eines Nutzfahrzeugs in Kurvenfahrt mit einer Drossel in einem Verbindungskanal zwischen den Luftfederbälgen der rechten und der linken Fährzeugseite;
- Fig.8: eine schematische Ansicht eines Nutzfahrzeugs in Kurvenfahrt ohne Drossel in dem Verbindungskanal zwischen den Luftfederbälgen der rechten und der linken Fahrzeugseite.

### Beschreibung des Ausführungsbeispiels

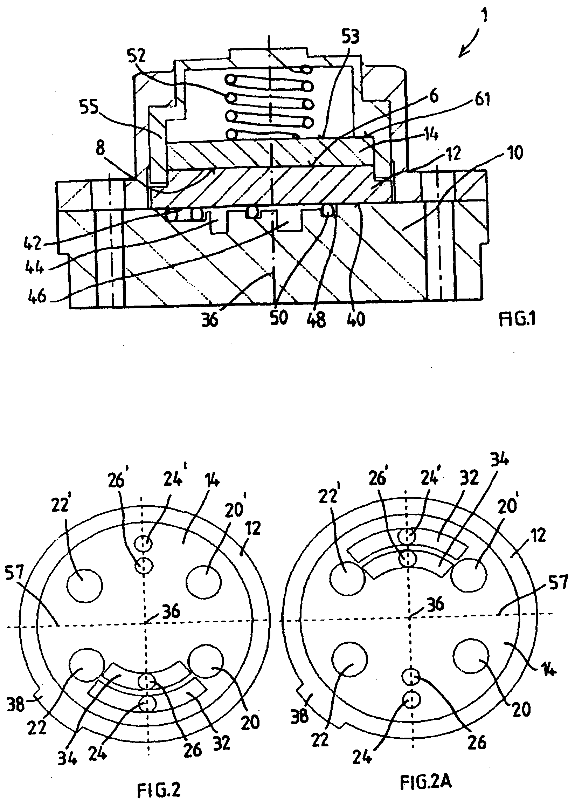

In Fig.1 ist eine Schnittdarstellung eines Niveauregelventils 1 einer Luftfederungseinrichtung eines luftgefederten Nutzfahrzeugs gemäß einer bevorzugten Ausführungsform der Erfindung gezeigt. Bei dem Nutzfahrzeug kann es sich um eine einzelnes Fahrzeug wie eine Zugmaschine oder einen Anhänger wie einen Deichselanhänger oder einen Auflieger handeln.

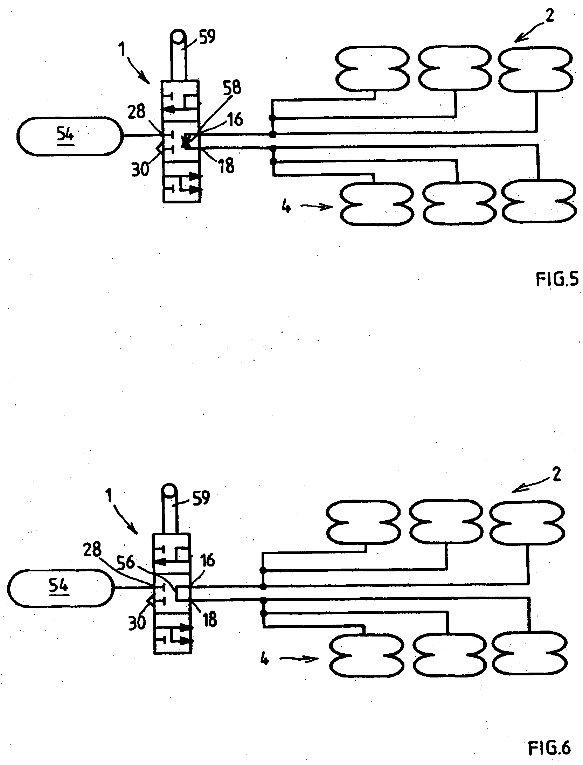

Das Niveauregelventil 1 dient zum Halten des Fahrzeugaufbaus 3 auf konstantem Niveau durch Be- bzw. Entlüften von Luftfederbälgen abhängig von der detektierten Niveaulage des Fahrzeugsaufbaus, welche unter anderem von der Beladung abhängt. In Fig.5 sind exemplarisch drei Luftfederbälge 2, 4 je Fahrzeugseite, rechts und links gezeigt.

Das Niveauregelventil 1 weist wenigstens zwei sich entlang von Kontaktflächen 6, 8 kontaktierende, in einem Ventilgehäuse 10 gelagerte, relativ zueinander bewegliche Ventilkörper 12, 14 auf, in welchen jeweils in die Kontaktflächen 6, 8 mündende Strömungswege ausgebildet sind, wobei der Überdeckungsgrad der Mündungen der Strömungswege der Ventilkörper 12, 14 abhängig von der Niveaulage des Fahrzeugaufbaus 3 ist.

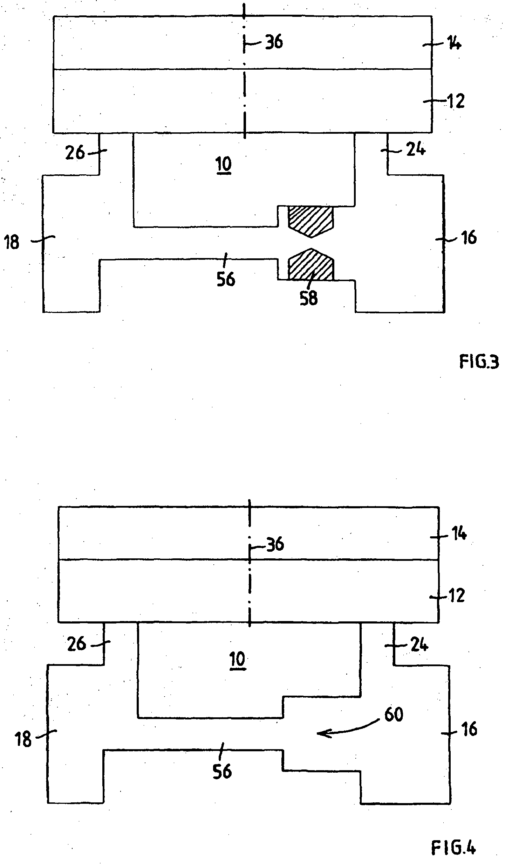

Weiterhin weist das Ventilgehäuse 10 des Niveauregelventils 1 einen Luftfederbalg-Anschluss 16 für die Luftfederbälge 2 der rechten Seite und einen weiteren Luftfederbalg-Anschluss 18 für die Luftfederbälge 4 der linken Seite des Fahrzeugs auf, wie aus Fig.3 und Fig.4 bzw. Fig. 5 und Fig.6 hervorgeht.

Besonders bevorzugt weist der eine Ventilkörper 12 als Strömungswege einen Belüftungskanal 20, einen Entlüftungskanal 22 sowie einen Strömungskanal 24 für die Luftfederbälge 2 der rechten Seite und einen Strömungskanal 26 für die Luftfederbälge 4 der linken Seite auf.

Der Belüftungskanal 20, der Entlüftungskanal 22 sowie die Strömungskanäle 24, 26 für die Luftfederbälge 2 der rechten Seite und für die Luftfederbälge 4 der linken Seite münden einerseits in die Kontaktfläche 6 des einen Ventilkörpers 12. Andererseits steht der Belüftungskanal 20 mit einem in der Ansicht von Fig.5 sichtbaren Druckluftreservoir-Anschluss 28 des Ventilgehäuses 10, der Entlüftungskanal 22 mit einer ebenfalls in Fig.5 sichtbaren Drucksenke 30 des Ventilgehäuses 10 und der Strömungskanal 24 für die Luftfederbälge 2 der rechten Seite mit dem einen Luftfederbalg-Anschluss 16 des Ventilgehäuses 10 und der Strömungskanal 26 für die Luftfederbälge 4 der linken Seite mit dem weiteren Luftfederbalg-Anschluss 18 des Ventilgehäuses 10 in Strömungsverbindung, wie Fig.3 und Fig.4 zeigt.

Besonders bevorzugt weist der andere Ventilkörper 14 an seiner zu dem einen Ventilkörper 12 weisenden Kontaktfläche 8 eine mit der Mündung des Strömungskanals 24 für die Luftfederbälge 2 der rechten Seite in Strömungsverbindung stehende Ausnehmung 32 sowie eine mit der Mündung des Strömungskanals 26 für die Luftfederbälge 4 der linken Seite in Strömungsverbindung stehende Ausnehmung 34 auf. Dabei hängt der Überdeckungsgrad dieser Ausnehmungen 32, 34 mit der Mündung des Belüftungskanals 20 oder mit der Mündung des Entlüftungskanals 22 des einen Ventilkörpers 12 von der Niveaulage des Fahrzeugaufbaus 3 ab. Die Ausnehmungen 32, 34 des anderen Ventilkörpers 14 sind dabei vorzugsweise als parallel zur Kontaktfläche 8 verlaufende Nuten ausgebildet. Die Strömungswege 32, 34 in dem anderen Ventilkörper 14 sind folglich nicht den Querschnitt passierende Strömungswege, wie beispielsweise Durchgangsbohrungen, sondern eine Strömung in, innerhalb oder entlang des Ventilkörpers 14 führende Strömungswege, genauer eine Strömung entlang der zu dem einen Ventilkörper 12 weisenden Kontaktfläche 8 leitende Strömungswege und nicht durch den Ventilkörper 14 hindurch leitende Strömungswege.

Besonders bevorzugt sind die Ventilkörper als einander kontaktierende Ventilscheiben 12, 14 kreisförmigen Querschnitts mit im wesentlichem identischem Durchmesser ausgebildet. In diesem Fall sind die Nuten 32, 34 der anderen Ventilscheibe 14 zweckmäßig als radial voneinander beabstandete, in Bezug zu einer zentralen Achse 36 konzentrische Kreisbögen ausgebildet. Um eine Überdeckung zu gewährleisten, sind die Strömungskanäle 24 und 26 bzw. deren Mündungen in der Kontaktfläche 6 mit entsprechendem radialem Abstand in der einen Ventilscheibe 12 ausgebildet.

Beispielsweise ist die andere Ventilscheibe 14 abhängig von der Niveaulage des Fahrzeugaufbaus 3 relativ zu der einen, im Ventilgehäuse 10 drehfest gelagerten Ventilscheibe 12 um die zentrale Achse 36 drehbar. Die andere Ventilscheibe 14 wird dabei bevorzugt durch einen in Fig.5 und Fig.6 gezeigten Hebel 59 drehgetrieben, welcher wiederum vom Fahrzeugaufbau 3 betätigt wird. Weiterhin ist die eine, in dem Ventilgehäuse 10 drehfest gelagerte Ventilscheibe 12 in Bezug zur zentralen Achse 36 im Ventilgehäuse 10 axial beweglich gelagert. Die drehfeste Lagerung der einen Ventilscheibe 12 ist beispielsweise durch eine randseitig vorspringende Nase 38 bewerkstelligt, welche in eine komplementär geformte, hier nicht gezeigte Ausnehmung im Ventilgehäuse 10 radial eingreift (Fig.2). Die axiale Beweglichkeit der einen Ventilscheibe 12 kann dadurch realisiert sein, dass sie ähnlich wie bei einem Zylinder-Kolbentrieb innerhalb einer zylindrischen Aufnahmebohrung im Ventilgehäuse 10 gelagert ist.

Weiterhin begrenzt die eine, in dem Ventilgehäuse 10 drehfest gelagerte und in Bezug zur zentralen Achse 36 im Ventilgehäuse 10 axial beweglich gelagerte Ventilscheibe 12 mit ihrer von der anderen Ventilscheibe 14 weg weisenden Seitenfläche 40 im Ventilgehäuse 10 ausgebildete und unter Druck stehende, voneinander getrennte und gegeneinander abgedichtete Kammern 42, 44, 46, wie insbesondere Fig.1 zeigt. Dabei steht eine Kammer 42 mit dem Druckluftreservoir-Anschluss 28, eine Kammer 44 mit dem einen Luftfederbalg-Anschluss 16 und eine weitere Kammer 46 mit dem weiteren Luftfederbalg-Anschluss 18 des Ventilgehäuses 10 in Strömungsverbindung. Diese Kammern 42, 44, 46 sind dann mittels wenigstens axial elastischer, sich einerseits an der einen Ventilscheibe 12 und andererseits in Nuten 48 im Ventilgehäuse 10 abstützenden Dichtungen 50 gegeneinander abgedichtet.

Da insbesondere der Druckluftreservoir-Anschluss 28 und auch die Luftfederbalg-Anschlüsse 16, 18 wegen des auf den Luftfederbälgen 2, 4 lastenden Eigengewichts des Fahrzeugs in der Regel einen gegenüber der Atmosphäre höheren Druck aufweisen, ist in den Kammern 42, 44, 46 stets ein Druck vorhanden, welcher die eine Ventilscheibe 12 gegen die andere Ventilscheibe 14 presst, um die Dichtigkeit der Strömungsübergange zwischen den Strömungskanälen 20, 22, 24, 26 und den Nuten 32, 34 senkrecht zu den Kontaktflächen 6, 8 zu gewährleisten.

Die andere Ventilscheibe 14 ist zusätzlich zu ihrer Drehbarkeit um die zentrale Achse 36 auch begrenzt axial verschieblich in einer mit einem Achskörper über einen Hebel 59 in Wirkverbindung stehenden Mitnehmerhülse 55 im Ventilgehäuses 10 gelagert. Diese Mitnehmerhülse 55 nimmt die andere Ventilscheibe 14 dann mit, wenn sie von dem in Fig.5 und Fig.6 gezeigten Hebel 59 um die zentrale Achse 36 verdreht wird, abhängig von der jeweiligen Niveaulage des Fahrzeugsaufbaus in Bezug zum Achskörper. Die begrenzte axiale Verschiebbarkeit der andere Ventilscheibe 14 in der Mitnehmerhülse ergibt sich durch einen an der Mitnehmerhülse 55 ausgebildeten axialen Anschlag 61.

Folglich ist die eine Ventilscheibe 12 gegen die andere, in der Mitnehmerhülse 55 axial verschieblich gelagerte Ventilscheibe 14 durch den Druck in den Kammern 42, 44, 46 belastet, wobei sich die andere Ventilscheibe 14 an dem axialen Anschlag 61 der Mitnehmerhülse 55 abstützt. Andererseits ist die andere Ventilscheibe 14 hierzu gegensinnig bevorzugt durch wenigstens eine Druckfeder 52 belastet, welche sich vorzugsweise am Boden der tassenförmigen Mitnehmerhülse 55 abstützt.

Da die andere Ventilscheibe an dem Anschlag 61 axial abgestützt ist und die Federkraft der Druckfeder 52 kleiner als die gegensinnigen Kräfte aus dem Druck in den Kammern 42, 44, 46 ist, sorgt ausreichender Druck in den Kammern 42, 44, 46 dafür, dass die beiden Ventilscheiben 12, 14 gegeneinander und axial gepresst bzw. gedrängt werden, um die Dichtigkeit der Strömungsübergange zwischen den Strömungskanälen 20, 22, 24, 26 und den Nuten 32, 34 senkrecht zu den Kontaktflächen 6, 8 zu gewährleisten.

Bei drucklosen Kammern 42, 44, 46 hingegen sorgt die wenigstens eine Druckfeder 52 alleine für den notwendigen Anpressdruck der anderen Ventilscheibe 14 gegen die eine Ventilscheibe 12, um die Dichtigkeit der Strömungsübergange zwischen den Strömungskanälen 20, 22, 24, 26 und den Nuten 32, 34 senkrecht zu den Kontaktflächen 6, 8 zu gewährleisten.

Gemäß einer weiteren, hier nicht gezeigten Ausführungsform können die sich in den Nuten 48 im Ventilgehäuse 10 abstützenden Dichtungen 50 derart ausgeführt sein, dass sie eine derart große axiale Vorspannung auf die eine Ventilscheibe 12 ausüben, dass sie bei drucklosen Kammern 42, 44, 46 gegen die andere, dann an dem axialen Anschlag 61 der Mitnehmerhülse 55 abgestützte Ventilscheibe 14 dichtend gepresst wird und auf diese Weise die Dichtigkeit der Strömungsübergange zwischen den Strömungskanälen 20, 22, 24, 26 und den Nuten 32, 34 senkrecht zu den Kontaktflächen 6, 8 gewährleistet wird, ohne dass hierzu eine zusätzliche Druckfeder 52 notwendig wäre.

Gemäß einer weiteren Ausführungsform können auch beide Alternativen, wenigstens eine die andere Ventilscheibe 14 vorspannende Druckfeder 52 einerseits und die eine Ventilscheibe 12 axial vorspannende Dichtungen 50 andererseits verwirklicht sein.

Wie aus Fig.2 in Verbindung mit Fig.2A hervorgeht, ist in der einen Ventilscheibe 12 in Bezug zu einer eine Symmetrieachse 57 des kreisförmigen Querschnitts bildenden Achse symmetrisch zu dem Belüftungskanal 20, dem Entlüftungskanal 22 sowie den Strömungskanälen 24, 26 ein weiterer Belüftungskanal 20', ein weiterer Entlüftungskanal 22' sowie ein weiterer Strömungskanal 24' für die Luftfederbälge 2 der rechten Seite und ein weiterer Strömungskanal 26' für die Luftfederbälge 4 der linken Seite ausgebildet. Damit kann die andere Ventilscheibe 14 in Bezug zu der einen Ventilscheibe 12 auch in einer um 180 Grad verdrehten Lage in das Ventilgehäuse 10 eingebaut werden. Wenn beispielsweise die andere Ventilscheibe 14 mittels des Hebels 59 mit dem Fahrzeugaufbau 3 in Verbindung steht und abhängig von der Niveaulage oder der Last des Fahrzeugsaufbaus gegenüber der einen Ventilscheibe 12 verdreht wird, ergibt sich dadurch eine höhere Flexibilität bezüglich der Einbaulage des Niveauregelventils 1.

Wie am besten aus Fig.3 und Fig.4 hervorgeht, weist das Ventilgehäuse 10 des Niveauregelventils 1 einen Verbindungskanal 56 zwischen den beiden Luftfederbalg-Anschlüssen 16, 18 auf, in welchem wahlweise wenigstens ein Einsatzkörper in Form einer den Strömungsquerschnitt zwischen dem einen Luftfederbalg-Anschluss 16 und dem weiteren Luftfederbalg-Anschluss 18 verengenden Drossel 58 oder in Form eines hier nicht gezeigten Sperrelements zum Sperren des Strömungsquerschnitts des Verbindungskanals 56 lösbar befestigt ist.

Wie Fig.5 und Fig.6 zeigen, ist das Niveauregelventil 1 bevorzugt als 3/3-Wegeventil ausgebildet. In der Belüftungsstellung des Niveauregelventils 1 werden beide Luftfederbalg-Anschlüsse 16, 18 parallel oder zeitgleich belüftet und in der Entlüftungsstellung gleichzeitig oder parallel entlüftet. In der in Fig. 5 und Fig.6 gezeigten Neutralstellung des Niveauregelventils 1, d.h. wenn keine Be- oder Entlüftung der Luftfederbälge 2, 4 stattfindet, stehen dann die Luftfederbälge 2, 4 der rechten und der linken Fahrzeugseite über den Verbindungskanal 56 im Ventilgehäuse 10 des Niveauregelventils 1 miteinander in Strömungsverbindung.

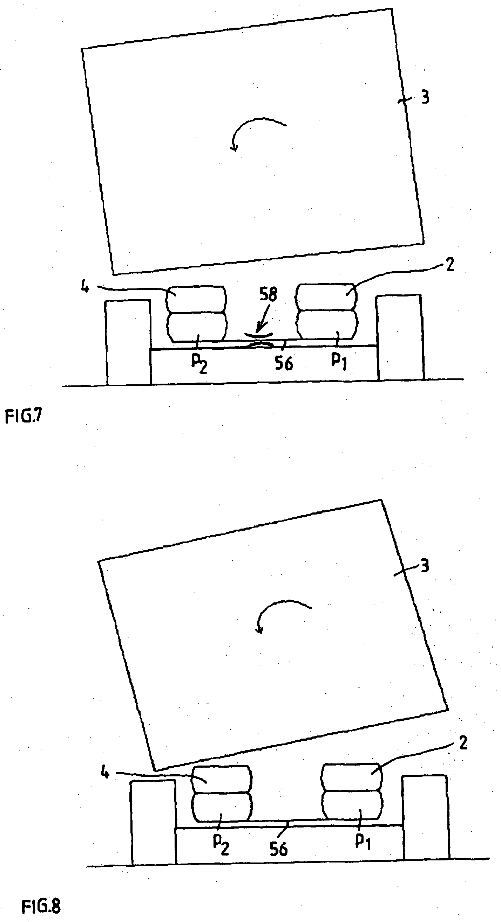

Falls eine Drossel 58 in dem Verbindungskanal 56 angeordnet wird (Fig.3 und Fig.5), können Wankbewegungen des Fahrzeugaufbaus 3 ausgeglichen werden, indem die Drossel 58 eine Druckluftströmung von den Luftfederbälgen 4 der höher belasteten Kurvenaußenseite zu den Luftfederbälgen 2 der niedriger belasteten Kurveninnenseite nur eingeschränkt zulässt, wie durch Fig.7 veranschaulicht wird. Dadurch bleibt der Druck und damit die Federrate in den Luftfederbälgen 4 der Kurvenaußenseite wenigstens für eine gewisse Zeitdauer hoch, was zu einer niedrigeren Einfederung an der Kurvenaußenseite und letztlich zu einer geringeren Wankbewegung des Fahrzeugaufbaus 3 führt.

Auf diese Weise wird ein quasi-zweikreisiges System verwirklicht, bei welchem der Kreis der Luftfederbälge 2 der rechten Fahrzeugseite und der Kreis der Luftfederbälge 4 der linken Fahrzeugseite voneinander quasi entkoppelt sind. Diese Situation ist in Fig.5 und Fig.7 schematisch dargestellt. Der Druck p₂ in den kurvenäußeren Luftfederbälgen 4 ist dann während eines gewissen Zeitraums größer als der Druck p₁ in den kurveninneren Luftfederbälgen 2, weil der Druckausgleich durch die Drossel 58 behindert und die kurvenäußeren Räder höher belastet sind.

Falls in dem Verbindungskanal 56 ein hier nicht gezeigtes Sperrelement zum Sperren der Strömung zwischen dem einen Luftfederbalg-Anschluss 16 und dem weiteren Luftfederbalg-Anschluss 18 lösbar montiert wird, können die Luftfederbälge 2, 4 der rechten Fahrzeugseite und der linken Fahrzeugseite über die beiden nun strömungstechnisch völlig getrennten Luftfederbalg-Anschlüsse 16, 18 unabhängig voneinander be- bzw. entlüftet werden. Zur lösbaren Befestigung eines Einsatzkörpers 58 ist in dem Verbindungskanal 56 eine entsprechende Aufnahme 60 vorgesehen.

Nicht zuletzt kann auch auf einen Einsatzkörper 58 im Verbindungskanal 56 völlig verzichtet werden, d.h. es wird kein Einsatzkörper 58 in den Verbindungskanal 56 eingesetzt, so dass eine ungehinderte Strömung zwischen den Luftfederbälgen 2, 4 der rechten Fahrzeugseite und der linken Fahrzeugseite möglich ist. Diese Situation zeigt Fig.4, Fig.6 und Fig.8. In diesem Fall ist wegen des ungehinderten Druckausgleichs der Druck p₂ in den Luftfederbälgen 4 der kurvenäußeren Luftfederbälge ungefähr gleich dem Druck p₁ in den kurveninneren Luftfederbälgen 2.

### Bezugszeichenliste

- 1: Niveauregelventil
- 2: Luftfederbälge rechts
- 3: Fahrzeugaufbau
- 4: Luftfederbälge.links
- 6: Kontaktfläche
- 8: Kontaktfläche
- 10: Ventilgehäuse
- 12: Ventilscheibe
- 14: Ventilscheibe
- 16: Luftfederblag-Anschluss
- 18: Luftfederbalg-Anschluss
- 20: Belüftungskanal
- 22: Entlüftungskanal
- 24: Strömungskanal
- 26: Strömungskanal
- 28: Druckluftreservoir-Anschluss
- 30: Drucksenke
- 32: Nut
- 34: Nut
- 36: Achse
- 38: Nase
- 40: Seitenfläche
- 42: Kammer
- 44: Kammer
- 46: Kammer
- 48: Nuten
- 50: Dichtungen
- 52: Druckfeder
- 53: Seitenfläche
- 54: Druckluftreservoir
- 55: Mitnehmerhülse
- 56: Verbindungskanal
- 57: Symmetrieachse
- 58: Drossel
- 59: Hebel
- 60: Aufnahme
- 61: Anschlag

## Patentansprüche

1. Niveauregelventil (1) für eine Luftfederungseinrichtung zur Niveauregelung des Fahrzeugaufbaus (3) von luftgefederten Fahrzeugen durch Luftversorgung wenigstens eines Luftfederbalgs (2, 4) abhängig von der Niveaulage des Fahrzeugsaufbaus (3), welches wenigstens zwei sich entlang von Kontaktflächen (6, 8) kontaktierende, in einem Ventilgehäuse (10) gelagerte und entlang der Kontaktflächen relativ zueinander bewegliche Ventilkörper (12, 14) aufweist, in welchen jeweils in die Kontaktflächen (6, 8) mündende Strömungswege (20, 22, 24, 26, 32, 34) ausgebildet sind, wobei ein Ventilkörper (12) in dem Ventilgehäuse (10) drehfest gelagert und, abhängig von der Niveaulage des Fahrzeugaufbaus (3), der andere Ventilkörper (14) relativ zu dem einen Ventilkörper (12) um eine Achse (36) drehbar ist, wobei sich ein bestimmter Überdeckungsgrad der Mündungen der Strömungswege (20, 22, 24, 26, 32, 34) der Ventilkörper (12, 14) einstellt, wobei der eine drehfest gelagerte Ventilkörper (12) im Ventilgehäuse (10) in Bezug zur Achse (36) axial beweglich gelagert ist und mit seiner von der Kontaktfläche (6) weg weisenden Seitenfläche (40) mehrere im Ventilgehäuse (10) ausgebildete Kammern (42, 44, 46) begrenzt, von welchen eine Kammer (42) mit einem Druckluftreservoir (28) und wenigstens eine weitere Kammer (44, 46) mit dem wenigstens einen Luftfederbalg (2, 4) in Strömungsverbindung steht, wobei der eine Ventilkörper (12) durch den in den Kammern (42, 44, 46) herrschenden Druck gegen den anderen Ventilkörper (14) gedrängt ist, **dadurch gekennzeichnet, dass** der eine Ventilkörper (12) als Strömungswege wenigstens
a) einen Belüftungskanal (20), einen Entlüftungskanal (22) sowie einen Strömungskanal (24) für den wenigstens einen Luftfederbalg (2) der rechten Seite und einen Strömungskanal (26) für den wenigstens einen Luftfederbalg (4) der linken Seite aufweist, wobei
b) der Belüftungskanal (20), der Entlüftungskanal (22) sowie die Strömungskanäle (24, 26) für den wenigstens einen Luftfederbalg (2) der rechten Seite und für den wenigstens einen Luftfederbalg (4) der linken Seite einerseits in die Kontaktfläche (6) des einen Ventilkörpers (12) münden und andererseits
c) der Belüftungskanal (20) mit einem Druckluftreservoir-Anschluss (28) des Ventilgehäuses (10), der Entlüftungskanal (22) mit einer Drucksenke (30) des Ventilgehäuses (10) und der Strömungskanal (24) für den wenigstens einen Luftfederbalg (2) der rechten - Seite mit einem Luftfederbalg-Anschluss (16) des Ventilgehäuses (10) und der Strömungskanal (26) für den wenigstens einen Luftfederbalg (4) der linken Seite mit einem weiteren Luftfederbalg-Anschluss (18) des Ventilgehäuses (10) in Strömungsverbindung steht, wobei
d) von den mehreren Kammern (42, 44, 46) wenigstens eine Kammer (42) mit dem Druckluftreservoir-Anschluss (28), wenigstens eine Kammer (44) mit dem einen Luftfederbalg-Anschluss (16) und wenigstens eine weitere Kammer (46) mit dem weiteren Luftfederbalg-Anschluss (18) des Ventilgehäuses (10) in Strömungsverbindung steht, und wobei
e) der andere Ventilkörper (14) an seiner zu dem einen Ventilkörper (12) weisenden Kontaktfläche (8) wenigstens eine mit der Mündung des Strömungskanals (24) für den wenigstens einen Luftfederbalg (2) der rechten Seite in Strömungsverbindung stehende Ausnehmung (32) sowie wenigstens eine mit der Mündung des Strömungskanals (26) für den wenigstens einen Luftfederbalg (4) der linken Seite in Strömungsverbindung stehende Ausnehmung (34) aufweist, wobei der Überdeckungsgrad dieser Ausnehmungen (32, 34) mit der Mündung des Belüftungskanal (20) oder mit der Mündung des Entlüftungskanals (22) des einen Ventilkörpers (12) von der Niveaulage des Fahrzeugaufbaus (3) abhängt, und wobei
f) die Ausnehmungen (32, 34) des anderen Ventilkörpers (14) als parallel zur Kontaktfläche (8) verlaufende Nuten ausgebildet sind, und wobei
g) die Ventilkörper (12, 14) als einander kontaktierende Ventilscheiben kreisförmigen Querschnitts mit im Wesentlichem identischen Durchmesser in Bezug zu einer zentralen Achse (36) ausgebildet sind, und wobei
h) die Nuten (32, 34) des anderen Ventilkörpers als radial voneinander beabstandete, in Bezug zur zentralen Achse (36) konzentrische Kreisbögen ausgebildet sind, und wobei
i) das Ventilgehäuse (10) wenigstens einen Luftfederbalg-Anschluss (16) für wenigstens einen Luftfederbalg (2) der rechten Seite und wenigstens einen weiteren Luftfederbälg-Anschluss (18) für wenigstens einen Luftfederbalg (4) der linken Seite des Fahrzeugs sowie einen Verbindungskanal (56) zwischen den beiden Luftfederbalg-Anschlüssen (16,18) aufweist, in welchem wahlweise wenigstens ein Einsatzkörper in Form einer den Strömungsquerschnitt zwischen dem einen Luftfederbalg-Anschluss (16) und dem weiteren Luftfederbalg-Anschluss (18) verengenden Drossel (58) oder in Form eines Sperrelements zum Sperren des Strömungsquerschnitts lösbar befestigt ist, und wobei
j) in dem einen Ventilkörper (12) jeweils achsensymmetrisch ein weiterer Belüftungskanal (20'), ein weiterer Entlüftungskanal (22') sowie ein weiterer Strömungskanal (24') für den wenigstens einen Luftfederbalg (2) der rechten Seite und ein weiterer Strömungskanal (26') für den wenigstens einen Luftfederbalg (4) der linken Seite derart ausgebildet ist, dass in einer um 180 Grad um die zentrale Achse (36) verschwenkten Lage des anderen Ventilkörpers (14) in Bezug zu dem einen Ventilkörper (12) die eine Ausnehmung (32) des anderen Ventilkörpers (14) mit der Mündung des Strömungskanals (24') für den wenigstens einen Lüftfederbalg (2) der rechten Seite sowie die weitere Ausnehmung (34) mit der Mündung des weiteren Strömungskanals (26') für den wenigstens einen Luftfederbalg (4) der linken Seite in Strömungsverbindung steht und der Überdeckungsgrad dieser Ausnehmungen (32, 34) mit der Mündung des Belüftungskanals (20') oder mit der Mündung des Entlüftungskanals (22'), des einen Ventilkörpers (12) von der Niveaulage des Fahrzeugaufbaus (3) abhängt.

2. Niveauregelventil nach Anspruch 1, **dadurch gekennzeichnet, dass** die im Ventilgehäuse (10) ausgebildeten Kammern (42, 44, 46) in Bezug auf die Seitenfläche (40) des einen Ventilkörpers (12) derart verteilt angeordnet sind, dass die aus den in den Kammern (42, 44, 46) herrschenden Drücken resultierenden Druckkräfte entlang der Seitenfläche (40) im wesentlichen gleich verteilt sind.

3. Niveauregelventil nach Anspruch 1 oder 2, **dadurch gekennzeichnet, dass** der andere Ventilkörper (14) an einem um die Achse (36) im Ventilgehäuse (10) abhängig von der Niveaulage des Fahrzeugaufbaus (3) drehbar gelagerten Mitnehmer (55) axial verschieblich gelagert und durch den Druck in den Kammern (42, 44, 46) gegen einen axialen Anschlag (61) des Mitnehmers (55) gedrängt ist.

4. Niveauregelventil nach Anspruch 3, **dadurch gekennzeichnet, dass** die Kammern (42, 44, 46) mittels axial elastischer, sich einerseits an dem einen Ventilkörper (12) und andererseits am Ventilgehäuse (10) abstützenden Dichtungen (50) gegeneinander abgedichtet sind.

5. Niveauregelventil nach Anspruch 4, **dadurch gekennzeichnet, dass** die Dichtungen (50) in Nuten (48) des Ventilgehäuses (10) gehalten sind.

6. Niveauregelventil nach einem der Ansprüche 3 bis 5, **dadurch gekennzeichnet, dass** die sich am Ventilgehäuse (10) abstützenden Dichtungen (50) ausgeführt sind, um eine derart große axiale Vorspannung auf den einen Ventilkörper (12) auszuüben, dass er auch bei drucklosen Kammern (42, 44, 46) gegen den anderen, sich an dem axialen Anschlag (61) des Mitnehmers (55) abstützenden Ventilkörper (14) dichtend gepresst wird.

7. Niveauregelventil nach einem der Ansprüche 3 bis 6, **dadurch gekennzeichnet, dass** der andere Ventilkörper (14) durch in Bezug zu den vom Druck in den Kammern (42, 44, 46) ausgeübten Kräften gegensinnig wirkende Druckfedermittel (52) derart belastet ist, dass er auch bei drucklosen Kammern (42, 44, 46) gegen den einen Ventilkörper (12) dichtend gedrängt wird.

8. Luftfederungseinrichtung eines luftgefederten Fahrzeugs mit Niveauregulierung des Fahrzeugaufbaus, beinhaltend wenigstens ein Niveauregelventil (1) nach einem der vorhergehenden Ansprüche.

## Claims

1. Level control valve (1) for an air suspension system for level adjustment of the vehicle structure (3) of air-suspension vehicles by air supply to at least one suspension air bellows (2, 4) in response to the level of a vehicle structure (3), which comprises at last two valve bodies (12, 14) contacting each other along contact surfaces (6, 8), which are supported in a valve housing (10) and which are mobile relative to each other along said contact surfaces, in which valve bodies flow paths (20, 22, 24, 26, 32, 34) are formed which open each into said contact surfaces, with one valve body (12) being supported non-rotatably in said valve housing (10) whilst the other valve body (14) is rotatable relative to said first valve body (12) about an axis (36) as a function of the level of said vehicle structure (3), which results in a defined coverage ratio of the joining openings of said flow paths (20, 22, 24, 26, 32, 34) of said valve body (12, 14), wherein said first non-rotatably supported valve body (12) is supported for axial movement in said valve housing (10) relative to said axis (36) and defines, by its side surface (40) oriented away from said contact surface (6), a plurality of chambers (42, 44, 46) formed in said valve housing (10), whereof one chamber (42) is in flow communication with at least one compressed-air reservoir (28) whilst at least one further chamber (44, 46) is in flow communication with at least one suspension air bellows (2, 4), with said first valve body (2) being urged by the pressure prevailing in said chambers (42, 44, 46) against said other valve body (14), **characterised in that** said first valve body (12) comprises as flow paths at least
(1) one ventilation passage (20), one bleeder passage (22) as well as one flow passage (24) for said at least one suspension air bellows (2) on the right side and one flow passage (26) for said at least one suspension air bellows (4) on the left passage, with
(b) said ventilation passage. said bleeder passage (22) as well as said flow passages (24, 26) for said at least one suspension air bellows (2) o the right side and for said at least one suspension air bellows (4) on the left side open into said contact surface (6) of said first valve body (12), on the one hand, and, n the other hand,
(c) said ventilation passage (20) is in flow communication with a compressed-air reservoir connector (28) of said valve housing (10), said bleeder passage (22) is in flow communication with a pressure sink (30) of said valve housing (10) and said flow passage (24) for said at least suspension air bellows (2) on the right side is in flow communication with an suspension air bellows connector (16) of said valve housing (10) and said flow passage (26) for said at least one suspension air bellows (4) on the left side is in flow communication with another suspension air bellows connector (18) of said valve housing (10), wherein
(d) among said plurality of chambers (42, 44, 46) at least one chamber (42) is in flow communication with said compressed-air reservoir connector (28), at last chamber (44) communicates with said first suspension air bellows connector (16) and at least one further chamber (46) is in flow communication with said further suspension air bellows connector (18) of said valve housing (10), and wherein
(e) said other valve body (14) comprises a recess (32) on its contact surface (8) facing a valve body 12), which is in flow communication with the opening of said flow passage (24) for said at least one suspension air bellows (2) on the right side, as well as at least one recess (34) in flow communication with the opening of said flow passage (26) for said at least one suspension air bellows (4) of the left side, with the coverage ratio of these recesses (32, 34) with the opening of said ventilation passage <820) or with the opening of said bleeder passage (22) of said first valve body (12) being a function of the level of said vehicle structure (3), and wherein
(f) said recesses (32, 34) of said other valve body (14) are configured as grooves extending in parallel with said contact surface (8), and wherein
(g) said valve bodies (12, 14) are configured as mutually contacting valve discs having a circular section with a substantially identical diameter relative to a central axis (36), and wherein
(h) said grooves (32, 34) of said other valve body are configured as circular arcs radially spaced from each other and concentric relative to said central axis, and wherein
(i) said valve housing includes at least one suspension air bellows connector (16) of the right side and at least one further suspension air bellows connector (18) for at last one suspension air bellows (4) of the left side of the vehicle, as well as a communication passage (56) between said two suspension air bellows connectors (16, 18), in which optionally at least one insertable body in the form of a throttle (58) that restricts the flow section between said first suspension air bellows connector (16) and said further suspension air bellows connector (18) or in the form of a blocking element for blocking the flow section is detachably fastened between said two suspension air bellows connectors (16, 18), and wherein
(j) in said first valve body (12) a further ventilation passage (20'), a further bleeder passage (22') as well as a further flow passage (24') is configured, with axial symmetry, for said at least one suspension air bellows (2) of the right side and a further suspension air bellows (4) of the left side, such that with a position of the other valve body (14) relative to said first valve body (12), which is pivoted through 180 degrees about said central axis (36), a first recess (32) of said other valve body (14) is in flow communication with the opening of said flow passage (24') for said at least one suspension air bellows (2) of the right side as well as a said further recess (34) is in flow communication with the opening of said further flow passage (26') for said at least one suspension air bellows (4) of the left side, and the coverage ratio of said recesses (32, 34) with the opening of said ventilation passage (20') or with the opening of said bleeder passage (22') of said one valve body (12) depending on the level of said vehicle structure (3).

2. Level control valve according any of the preceding Claims, **characterised in that** said chambers (42, 44, 46) formed in said valve housing (10) are distributed and arranged relative to the side surface (40) of said valve body (12) in such a way that the pressure forces resulting from the pressures prevailing in said chambers (42, 44, 46) are substantially equally distributed along said side surface (40).

3. Level control valve according to Claim 1 or 2, **characterised in that** said other valve body (14) is supported for axial displacement on a follower (55) supported for rotation about said axis (36) in said valve housing (10) in response to the level of said vehicle structure (3), and is urged by the pressure in said chambers (42, 44, 46) against an axial stop (61) of said follower (55).

4. Level control valve according to Claim 3, **characterised in that** said chambers (42, 44, 46) are sealed from each other by means of axially resilient seals (50) which are supported, on the one hand, on said first valve body (12), and, on the other hand, on said valve housing (10).

5. Level control valve according to Claim 4, **characterised in that** said seals (50) are retained in grooves (48) of said valve housing (10).

6. Level control valve according to any of the Claims 3 to 5, **characterised in that** said seals (50) supported on said valve housing (10) are configured for exerting such a high axial bias on said first valve body (12) that it is sealingly pressed against said other valve body (14) supported on said axial stop (61) of said follower (55) even when there is no pressure in said chambers (42, 44, 46).

7. Level control valve according to any of the Claims 3 to 6, **characterised in that** said other valve body (14) is loaded by compressing spring means (52), which act in opposite directions relative to the forces exerted by the pressure in said chambers (42, 44, 46), such that it is sealingly urged against said first valve body (12) even when there is no pressure in said chambers (42, 44, 46).

8. Air suspension system of an air-suspended vehicle with level control of the vehicle structure, including at least one level control valve (1) according to any of the preceding Claims.

## Revendications

1. Correcteur d'assiette (1) pour un dispositif pneumatique de suspension pour la régulation du niveau de la carrosserie (3) de véhicules à suspension pneumatique par alimentation en air d'au moins un soufflet (2, 4) à air en fonction de la position en niveau de la carrosserie (3) du véhicule, qui a au moins deux obturateurs (12, 14) de correcteur d'assiette, en contact le long de surfaces (6, 8) de contact, montés dans un corps (10) de correcteur d'assiette et mobiles l'un par rapport à l'autre le long des surfaces de contact, obturateurs dans lesquels sont constitués respectivement des trajets (20, 22, 24, 26, 32, 34) d'écoulement débouchant respectivement dans les surfaces (6, 8) de contact, un obturateur (12) du correcteur d'assiette étant monté fixe en rotation dans le corps (10) du correcteur d'assiette et, en fonction de la position en niveau de la carrosserie (3) du véhicule, l'autre obturateur (14) du correcteur d'assiette peut tourner autour d'un axe (36) par rapport au un obturateur (12) du correcteur d'assiette, un degré de recouvrement déterminé des embouchures des trajets (20, 22, 24, 26, 32, 34) d'écoulement des obturateurs (12, 14) du correcteur d'assiette s'établissant, le un obturateur (12) du correcteur d'assiette, monté fixe en rotation, étant monté dans le corps (10) du correcteur d'assiette mobile axialement par rapport à l'axe (36) et délimitant, par sa surface (40) latérale éloignée de la surface (6) de contact, plusieurs chambres (42, 44, 46) constituées dans le corps (10) du correcteur d'assiette, l'une des chambres (42) étant en liaison fluidique avec un réservoir (28) d'air comprimé et au moins une autre chambre (44, 46) étant en liaison fluidique avec le au moins un soufflet (2, 4) à air, le un obturateur (12) du correcteur d'assiette étant repoussé contre l'autre obturateur (14) du correcteur d'assiette par la pression régnant dans les chambres (42, 44, 46), **caractérisé en ce que** le un obturateur (12) du correcteur d'assiette a, comme trajets d'écoulement, au moins
a) un canal (20) d'alimentation en air, un canal (22) d'évacuation de l'air, ainsi qu'un canal (24) d'écoulement pour le au moins un soufflet (2) à air du côté droit et un canal (26) d'écoulement pour le au moins un soufflet (4) à air du côté gauche, dans lequel
b) le canal (20) d'alimentation en air, le canal (22) d'évacuation de l'air, ainsi que les canaux (24, 26) d'écoulement pour le au moins un soufflet (2) à air du côté droit et pour le au moins un soufflet (4) à air du côté gauche débouchent d'une part dans la surface (6) de contact du un obturateur (12) du correcteur d'assiette et d'autre part
c) le canal (20) d'alimentation en air est en communication fluidique avec un raccord (28) de réservoir d'air comprimé du corps (10) du correcteur d'assiette, le canal (22) d'évacuation de l'air avec un puits (30) de pression du corps (10) du correcteur d'assiette et le canal (24) d'écoulement pour le au moins un soufflet (2) à air du côté droit avec l'un des raccords (16) de soufflet à air du corps (10) du correcteur d'assiette et le canal (26) d'écoulement pour le au moins un soufflet (4) à air du côté gauche avec l'autre raccord (18) de soufflet à air du corps (10) du correcteur d'assiette, dans lequel
d) parmi les plusieurs chambres (42, 44, 46), au moins une chambre (42) est en communication fluidique avec le raccord (28) de réservoir d'air comprimé, au moins une chambre (44) est en communication fluidique avec le un raccord (16) de soufflet à air et au moins une autre chambre (46) est en communication fluidique avec l'autre raccord (18) de soufflet à air du corps (10) du correcteur d'assiette et dans lequel
e) l'autre obturateur (14) du correcteur d'assiette a, sur sa surface (8) de contact, tournée vers le un obturateur (12) du correcteur d'assiette, au moins un évidement (32) en liaison fluidique avec l'embouchure du canal (24) d'écoulement pour le au moins un soufflet à air du côté gauche, ainsi qu'au moins un évidement (34) en liaison fluidique avec l'embouchure du canal (26) d'écoulement pour le au moins un soufflet (4) à air du côté gauche, le degré de recouvrement de ces évidements (32, 34) avec l'embouchure du canal (24) d'alimentation en air ou avec l'embouchure du canal (22) d'évacuation de l'air du un obturateur (12) du correcteur d'assiette dépendant de la position en niveau de la carrosserie (3) du véhicule, et dans lequel
f) les évidements (32, 34) de l'autre obturateur (14) du correcteur d'assiette sont constitués sous la forme de rainures s'étendant parallèlement à la surface (8) de contact et dans lequel
g) les obturateurs (12, 14) du correcteur d'assiette sont constituées sous la forme de disques du correcteur d'assiette, en contact l'un avec l'autre, de section transversale circulaire, en ayant un diamètre sensiblement identique par rapport à un axe (36) central et dans lequel
h) les rainures (32, 34) de l'autre obturateur du correcteur d'assiette sont constituées sous la forme d'arcs de cercle concentriques à l'axe (36) central et à distance radialement l'un de l'autre et dans lequel
i) le corps (10) de correcteur d'assiette a au moins un raccord (16) de soufflet à air pour au moins un soufflet (2) à air du côté droit et au moins un autre raccord (18) de soufflet à air pour au moins un soufflet à air du côté gauche du véhicule, ainsi qu'un canal (56) de liaison entre les deux raccords (16, 18) de soufflet à air, dans lequel au choix au moins une pièce rapportée, sous la forme d'un étranglement (58) rétrécissant la section transversale d'écoulement entre le un raccord (16) de soufflet à air et l'autre raccord (18) de soufflet à air ou sous la forme d'un élément d'obturation pour obturer la section transversale d'écoulement, est fixée de manière amovible et dans lequel
j) dans le un obturateur (12) du correcteur d'assiette est constitué respectivement, d'une manière symétrique par rapport à l'axe, un autre canal (20') d'alimentation en air, un autre canal (22') d'évacuation de l'air, ainsi qu'un autre canal (24') d'écoulement pour le au moins un soufflet (2) à air du côté droit et un autre canal (26') d'écoulement pour le au moins un soufflet (4) à air du côté gauche de manière à ce que, dans une position tournée autour de l'axe (36) central de 180 degrés de l'autre obturateur (14) du correcteur d'assiette par rapport au un obturateur (12) du correcteur d'assiette, le un évidement (32) de l'autre obturateur (14) du correcteur d'assiette soit en communication fluidique avec l'embouchure du canal (24') d'écoulement pour le au moins un soufflet (2) à air du côté droit, tandis que l'autre évidement (34) est en coopération fluidique avec l'embouchure de l'autre canal (26') d'écoulement pour le au moins un soufflet (4) à air du côté gauche et le degré de recouvrement de ces évidements (32, 34) avec l'embouchure du canal (20') d'alimentation en air ou avec l'embouchure du canal (22') d'évacuation de l'air du un obturateur (12) du correcteur d'assiette dépend de la position en niveau de la carrosserie (3) du véhicule.

2. Correcteur d'assiette suivant la revendication 1, **caractérisé en ce que** les chambres (42, 44, 46) formées dans le corps (10) du correcteur d'assiette sont réparties par rapport à la surface (40) latérale de l'un des obturateurs (12) du correcteur d'assiette de manière à ce que les forces de poussées provenant des pressions régnant dans les chambres (42, 44, 46) soient réparties sensiblement uniformément le long de la surface (40) latérale.

3. Correcteur d'assiette suivant la revendication 1 ou 2, **caractérisé en ce que** l'autre obturateur (14) du correcteur d'assiette est monté coulissant axialement sur un entraîneur (55), monté tournant autour de l'axe (36) dans le corps (10) du correcteur d'assiette en fonction de la position au niveau de la carrosserie (3) du véhicule, et est repoussé sur une butée (61) axiale de l'entraîneur (55) par la pression dans les chambres (42, 44, 46).

4. Correcteur d'assiette suivant la revendication 3, **caractérisé en ce que** les chambres (42, 44, 46) sont rendues étanches les unes par rapport aux autres au moyen de garnitures (50) d'étanchéité, élastiques axialement et s'appuyant d'une part sur le un obturateur (12) du correcteur d'assiette et d'autre part sur le corps (10) du correcteur d'assiette.

5. Correcteur d'assiette suivant la revendication 4, **caractérisé en ce que** les garnitures (50) d'étanchéité sont retenues dans des rainures (48) du corps (10) du correcteur d'assiette.

6. Correcteur d'assiette suivant l'une des revendications 3 à 5, **caractérisé en ce que** les garnitures (50) d'étanchéité, s'appuyant sur le corps (10) du correcteur d'assiette, sont réalisées pour appliquer une précontrainte axiale si grande à l'un des obturateurs (12) du correcteur d'assiette qu'il est pressé d'une manière étanche, même lorsque les chambres (42, 44, 46) sont sans pression, sur l'autre obturateur (14) du correcteur d'assiette s'appuyant sur la butée (61) axiale de l'entraîneur (55).

7. Correcteur d'assiette suivant l'une des revendications 3 à 6, **caractérisé en ce que** l'autre obturateur (14) du correcteur d'assiette est soumis à des moyens (52) à ressort de compression agissant de manière antagoniste aux forces appliquées par les chambres (42, 44, 46) de manière à être repoussé d'une manière étanche, même lorsque les chambres (42, 44, 46) sont sans pression, sur le un obturateur (12) du correcteur d'assiette.

8. Dispositif pneumatique de suspension d'un véhicule à suspension pneumatique, ayant une régulation du niveau de la carrosserie du véhicule, comprenant au moins un correcteur d'assiette (1) suivant l'une des revendications précédentes.
